# NEUE EUROPÄISCHE PATENTSCHRIFT

(11) **EP 2 310 543 B2**
(45) Veröffentlichungstag und Bekanntmachung des Hinweises auf die Entscheidung über den Einspruch: **28.05.2025**
(45) Hinweis auf die Patenterteilung: 07.08.2019
(21) Anmeldenummer: 09776843.6
(22) Anmeldetag: 26.06.2009
(51) Int. Cl.: C21D 1/10, C21D 1/42, C21D 9/40

(54) **VERFAHREN ZUM HÄRTEN WENIGSTENS EINER LAUFBAHN EINES LAGERRINGS FÜR EIN GROSSWÄLZLAGER**
METHOD FOR HARDENING AT LEAST ONE RACEWAY OF A BEARING RING FOR A LARGE-DIAMETER ROLLING BEARING
PROCÉDÉ DE TREMPE D'AU MOINS UNE PISTE DE ROULEMENT D'UN ANNEAU D'APPUI POUR UN PALIER À ROULEMENTS À GRANDE DIMENSION

(30) Priorität: 18.07.2008 DE 102008033735
(43) Veröffentlichungstag der Anmeldung: 20.04.2011
(73) Patentinhaber: thyssenkrupp rothe erde Germany GmbH, 44137 Dortmund (DE); ENRX GmbH, 79106 Freiburg (DE)
(72) Erfinder: SPINTIG, Wiilfried, 59558 Lippstadt (DE); STAKEMEIER, Bernd, 59597 Erwitte (DE); ROLLMANN, Jörg, 59558 Lippstadt (DE)
(74) Vertreter: Geitz Patentanwälte PartG mbB
(86) Internationale Anmeldenummer: PCT/EP2009/004611
(87) Internationale Veröffentlichungsnummer: WO 2010/006689

(56) Entgegenhaltungen:
- WO-A1-2007/082957
- WO-A2-2006/087152
- WO-A2-2006/087152
- JP-A- H06 200 326
- JP-A- H09 215 605
- US-A- 3 036 824
- ROLLMANN, JOERG ; SPINTIG, WILFRIED ; STAKEMEIER, BERND: "Development of new application fields for large roller bearings by developing a new slide way hardening process", ISSN 1612-2763, July 2005 (2005-07-01), ThyssenKrupp Techforum, pages 78 - 83, XP009123763

## Beschreibung

Die Erfindung betrifft ein Verfahren nach dem Oberbegriff des Anspruchs 1 zum Härten wenigstens einer Laufbahn eines Lagerrings für ein Grosswälzlager.

Die Härtung der Laufbahnen von Lagerringen für Grosswälzlager erfolgt heute überwiegend dadurch, dass zunächst Randschichten der Laufbahnen mit Hilfe von Heizvorrichtungen, die Heizleiter in Form von Induktionsspulen aufweisen und daher allgemein als Induktoren bezeichnet werden, erwärmt und dann mit Hilfe einer aus so genannten Brausen ausströmenden Kühlflüssigkeit abgeschreckt werden. Bekannt sind in diesem Zusammenhang z. B. Anlagen, mittels derer die Laufbahnen in je einem einstufigen Prozess auf ihrem ganzen Umfang erwärmt und abgeschreckt werden. Eine solche Verfahrensweise ist allerdings wegen der großen, z. B. bis zu 15 m und mehr betragenden Durchmesser der Lagerringe für Grosswälzlager mit einem hohen technischen Aufwand verbunden und kann zu einer ungleichmäßigen Erwärmung aufgrund üblicher Wärmedehnungen führen. Daher sind auch bereits zahlreiche Härtungsanlagen bekannt geworden, die wenigstens einen längs der Laufbahn verfahrbaren Induktor zur Härtung der Laufflächen der Lagerringe, vorzugsweise jedoch zwei Induktoren aufweisen, die gegenläufig längs der Laufbahn verfahrbar sind. Hierdurch ist es möglich, die Laufbahnen bzw. deren Randschichten in kleinen, in Umfangsrichtung aufeinander folgenden Zonen schrittweise oder kontinuierlich fortschreitend zu erwärmen und abzuschrecken. Ein Nachteil der zuletzt genannten Methode besteht allerdings darin, dass die gegenläufige Bewegung der beiden Induktoren an einer gemeinsamen Anfangszone begonnen und an einer gemeinsamen Endzone beendet werden muss. Da die Induktoren bzw. deren Heizleiter hierbei wegen der erforderlichen Isolierung oder aus geometrischen Gründen nicht auf Stoß angeordnet werden können, werden in den Anfangs- und Endzonen jeweils kleine, auch als Schlupf bezeichnete Zwischenräume erhalten, in denen eine nicht ausreichende Erwärmung stattfindet und die daher Bereiche mit reduzierter Härte in den Laufbahnen zur Folge haben. Es wäre zwar möglich, eine ausreichende Erwärmung auch in den genannten Zwischenräumen zu erzielen, indem z. B. die Induktoren und/oder Lagerringe kurzzeitig hin und her bewegt werden. Derartige Maßnahmen sind jedoch nur im Bereich der Anfangszone möglich, weil die Randschicht der Laufbahn zu Beginn der Bearbeitung noch nicht gehärtet ist. Im Bereich der Endzone besteht dagegen die Gefahr, dass durch die genannte Hin- und Herbewegung auch bereits abgeschreckte und damit gehärtete Zonen der Randschicht erneut erwärmt, d. h. angelassen werden, was zu weichen Stellen in der Laufbahn führen würde und daher vermieden werden muss.

Zur Vermeidung der beschriebenen Nachteile sind unterschiedliche Verfahrensweisen vorgeschlagen worden, die allerdings sämtlich nicht in vollem Umfang befriedigen.

Bekannt ist beispielsweise ein Verfahren (GB-PS 735 378), das zwei gegenläufig bewegbare Induktoren verwendet, deren Heizleiter mit einander zugeordneten Abschnitten versehen sind, die sich überlappen, sobald die Induktoren in der Anfangs- oder Endzone angeordnet sind. Dadurch können Zwischenräume zwischen den Induktoren zwar möglicherweise reduziert, aber nicht vollends vermieden werden, da eine gegenseitige Berührung oder zu starke Annäherung der Heizleiter auch hier verhindert werden muss.

Ein weiteres bekanntes Verfahren dieser Art (DE 10 2006 003 014 B3) zeichnet sich dadurch aus, dass zum Erwärmen der Endzone beide Induktoren, nachdem sie ihre Endstellungen in der Endzone erreicht haben, gemeinsam in eine der beiden möglichen Richtungen weiter bewegt werden. Die Erwärmung wird hierbei nur mit Hilfe des über die Endzone geführten Induktors fortgesetzt, während der andere, über eine bereits gehärtete Zone bewegte Induktor während dieser Phase ausgeschaltet wird. Dadurch soll ein erneutes Anlassen in dem bereits gehärteten Abschnitt weitgehend vermieden werden. Allerdings wird eingeräumt, dass zumindest geringe Anlasserscheinungen in dem Übergangsbereich von der Endzone zur benachbarten, bereits gehärteten Zone nicht ausgeschlossen werden können.

Schließlich ist ein Verfahren der eingangs bezeichneten Gattung bekannt (DE 10 2005 006 701 B3), das sich durch die Anwendung eines zusätzlichen Hilfsinduktors auszeichnet, der vor dem Zusammenführen von zwei gegenläufig bewegten (Haupt-) Induktoren in Richtung der Anfangs- und/oder Endzone vorgeschoben und zu deren Vorwärmung verwendet wird. Vor dem Einlaufen der Hauptinduktoren in die Endzone wird dieser Hilfsinduktor wieder zurückgezogen. Da auch hierdurch eine gleichmäßige Erwärmung der Laufbahn in der gemeinsamen Endzone nur bei einem Teil der üblichen Laufbahngeometrien bzw. Querschnitte sichergestellt werden kann, wird als zusätzliche Maßnahme zur gleichmäßigen Erwärmung vorgeschlagen, die Ränder der Laufbahn in den Bereichen gemeinsamer Heizzonen mit Nuten und/oder Bohrungen zu versehen. Das ist jedoch wegen der erforderlichen zusätzlichen Bearbeitung der Laufbahnen und auch aus konstruktiven Gründen nicht immer erwünscht.

Ausgehend von diesem Stand der Technik besteht das technische Problem der Erfindung darin, das Verfahren der eingangs bezeichneten Gattung dahingehend zu verbessern, dass die Laufbahn unter Vermeidung der genannten Nachteile lückenlos, d. h. auch in den gemeinsam zu erwärmenden Anfangs- und/oder Endzonen mit einer gleichbleibend hohen Härte versehen werden kann.

Gelöst wird dieses Problem erfindungsgemäß mit den kennzeichnenden Merkmalen des Anspruchs 1.

Das erfindungsgemäße Verfahren beruht auf der Erkenntnis, dass sich weiche, ungehärtete Segmente in der Laufbahn des Lagerrings dadurch vermeiden lassen, dass zumindest während der Vorwärmung der Endzone ausgewählte Eigenschaften (bzw. Zustände) des Hilfsinduktors gesteuert und dadurch gezielt verändert oder eingestellt werden. Bevorzugte Eigenschaften in diesem
Zusammenhang sind z. B. die Frequenz und die Phasenlage der die Heizleiter durchfließenden Ströme oder die örtliche Lage eines Hilfsinduktors, wie weiter unten näher erläutert ist.

Weitere vorteilhafte Merkmale der Erfindung ergeben sich aus den Unteransprüchen.

Die Erfindung wird nachfolgend in Verbindung mit Ausführungsbeispielen näher erläutert. Es zeigen:
Fig. 1 und 2 perspektivische Darstellungen bekannter Vorrichtungen zum Härten von Lagerringen mit Hilfe von zwei Hauptinduktoren und einem zusätzlichen Hilfsinduktor;
Fig. 3 eine vergrößerte perspektivische Darstellung eines Teils einer konischen Laufbahn eines Lagerrings und schematisch die Steuerung der Bewegung des Hilfsinduktors nach Fig. 2;
Fig. 4 schematisch die Wahl von Frequenzen der die Induktoren durchfließenden Heizströme;
Fig. 5 einen schematischen, senkrechten Schnitt durch die Laufbahn und die Haupt- und Hilfsinduktoren nach Fig. 3 im Bereich einer gemeinsamen Heizzone; und
Fig. 6 schematisch die Steuerung der Phasenlage der die Induktoren nach Fig. 5 durchströmenden Heizströme in einer der Fig. 5 ähnlichen Darstellung.

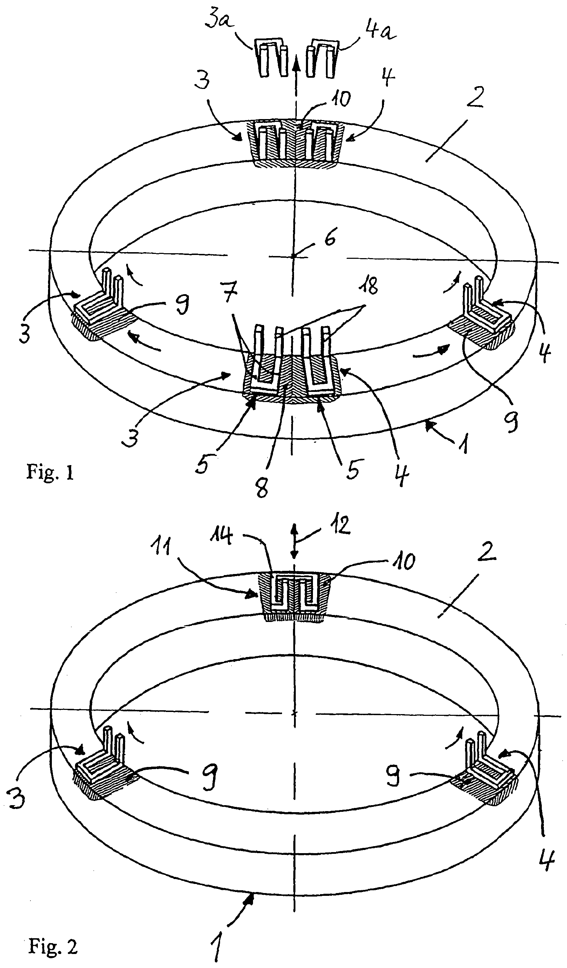

Fig. 1 zeigt einen Lagerring 1 mit wenigstens einer zu härtenden, hier axialen Laufbahn 2 und zwei in verschiedenen Positionen längs der Laufbahn 2 angeordneten, nachfolgend als Hauptinduktoren 3 und 4 bezeichneten Induktoren üblicher Bauweise. Jeder Hauptinduktor 3, 4 enthält eine Heizschleife 5, die im Wesentlichen aus zwei radial zu einer Mittelachse 6 des Lagerrings 1 angeordneten, elektrisch miteinander verbundenen Heizleitern 7 gebildet ist. Zu Beginn eines Härtevorgangs sind die Heizschleifen 5 der beiden Hauptinduktoren 3 und 4 parallel zu und mit geringen Abstand von der Laufbahn 2 und außerdem im Bereich einer schraffiert dargestellten, gemeinsamen Heiz- bzw. Anfangszone 8 angeordnet. Die Heizschleifen 5 haben hier, in Umfangsrichtung des Lagerrings 1 betrachtet, einen kleinstmöglichen Abstand voneinander. In dieser Position wird die Erwärmung einer Randschicht der Laufbahn 2 durch Einschaltung der Hauptinduktoren 3, 4 gestartet. Um zu erreichen, dass die gesamte Anfangszone 8 bis zu einer vorgewählten Tiefe der Randschicht der Laufbahn 2 auf die gewünschte Härtetemperatur erwärmt wird, können der Lagerring 1 und/oder die Hauptinduktoren 3, 4 in eine in Umfangsrichtung erfolgende Pendelbewegung versetzt werden.

Nach dem Erwärmen der Anfangszone 8 werden die Hauptinduktoren 3 und 4, wie in Fig. 1 durch Pfeile angedeutet ist, in entgegengesetzte Richtungen längs der Laufbahn 2 verfahren, um diese abschnittweise und sukzessiv zu erwärmen. Dadurch wird die Laufbahn 2 zunächst in Zwischenzonen 9 erwärmt, bis die Hauptinduktoren 3 und 4 eine weitere gemeinsame, nachfolgend als Endzone 10 bezeichnete Heizzone erreichen, in der sie wieder zusammentreffen und wie in der Anfangszone 8 mit einem kleinstmöglichen Abstand angeordnet werden, um die Endzone 10 gemeinsam aufzuheizen. Zur Abschreckung der erwärmten Zonen 8, 9 und 10 der Laufbahn 2 dienen so genannte Brausen, die zum Besprühen der erwärmten Zonen mit einer Kühlflüssigkeit dienen, in Fig. 1 aber zur Vermeidung von Unklarheiten nicht dargestellt sind. Diese Brausen sind vorzugsweise mit den Hauptinduktoren 3 und 4 zu je einer gemeinsam in Umfangsrichtung bewegbaren Baueinheit verbunden und mit besonderem Vorteil schwenkbar gelagert, so dass sie je nach Bedarf so positioniert werden können, dass die Kühlflüssigkeit in der gewünschten Richtung und Reihenfolge auf alle erwärmten Zonen gerichtet wird. Außerdem können die Hauptinduktoren 3 und 4, nachdem die Endzone 10 ausreichend erwärmt ist, senkrecht zur Laufbahn 2 von dieser entfernt und in eine Außerbetriebsstellung überführt werden, die in Fig. 1 durch Bezugszeichen 3a, 4a angedeutet ist. Dies ermöglicht es, die Brausen so zu verschwenken, dass die Laufbahn 2 danach auch im Bereich der Endzone 10 abgeschreckt werden kann.

Gemäß Fig. 2 ist dort, wo sich die Endzone 10 befindet, zusätzlich ein Hilfsinduktor 11 angeordnet. Dieser kann in Richtung eines Doppelpfeils 12 in Richtung der Laufbahn vorgeschoben oder von dieser zurückgezogen werden und besitzt wenigstens eine Heizschleife 14, die vorzugsweise analog zu den Heizschleifen 5 der Hauptinduktoren 3, 4 ausgebildet ist und sich im Wesentlichen über die ganze, in Umfangsrichtung gemessene Länge der Endzone 10 erstrecken kann. Der Hilfsinduktor 11 wird, wenn sich die Hauptinduktoren 3, 4 noch über Zwischenzonen 9 befinden, in Richtung der Laufbahn 2 vorgeschoben und aktiviert, um diese dadurch im Bereich der Endzone 10 vorzuwärmen. Wenn sich die Hauptinduktoren 3, 4 später der Endzone 10 immer mehr annähern, wird der Hilfsinduktor 11 wieder zurückgezogen, so dass die restliche Erwärmung der Endzone 10 von den Hauptinduktoren 3, 4 übernommen werden kann.

Die beschriebene Verfahrensweise ist dem Fachmann allgemein bekannt und braucht daher nicht näher erläutert zu werden. Zur Vermeidung von Wiederholungen werden außerdem die eingangs genannten Druckschriften, in denen auch Mittel zur Bewegung der Induktoren beschrieben sind, hiermit durch Referenz auf sie zum Gegenstand der vorliegenden Offenbarung gemacht.

Um auch innerhalb der gemeinsamen Heizzonen 8 und 10, insbesondere jedoch innerhalb der Endzone 10 bis zum Erreichen einer vorgewählten Härtetiefe eine absolut gleichmäßige Erwärmung zu erzielen, wird erfindungsgemäß vorgeschlagen, zumindest während derjenigen Phasen, in denen die Endzone 10 vorgewärmt wird, zusätzliche, der Vergleichmäßigung des Wärmeeintrags dienende Maßnahmen zu ergreifen und zu diesem Zweck ausgewählte Eigenschaften oder Zustände des Hilfsinduktors 11 zu steuern bzw. einzustellen oder zu verändern.

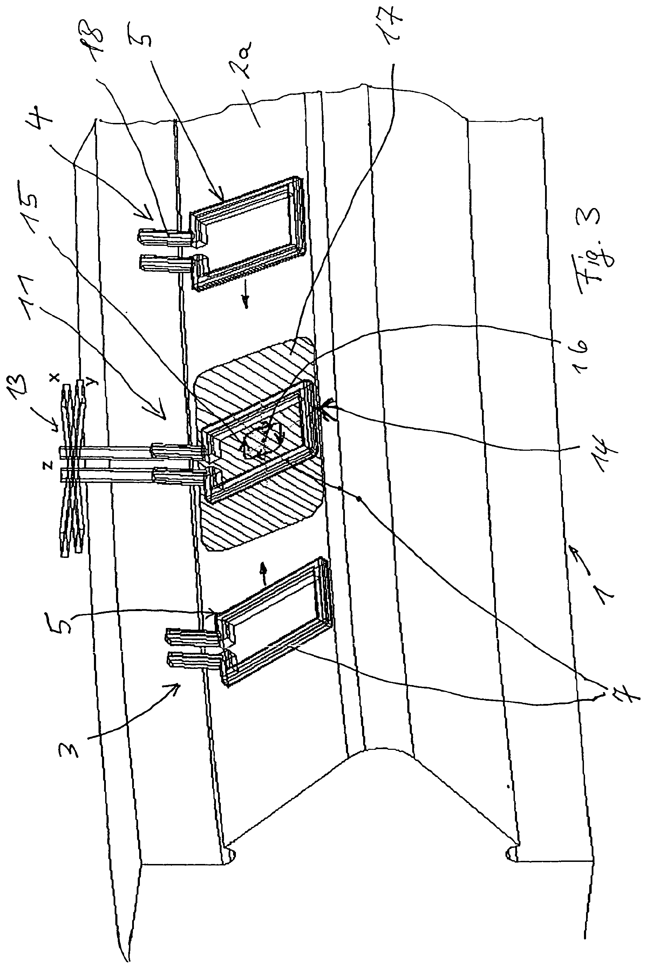

Fig. 3 zeigt ein erstes Ausführungsbeispiel für eine derartige Zusatzmaßnahme. Hier ist schematisch ein Teilstück des Lagerrings 1 mit einer konisch verlaufenden Laufbahn 2a dargestellt, der die beiden Hauptinduktoren 3, 4 und der Hilfsinduktor 11 derart zugeordnet sind, dass die Heizschleifen 5, 14 im Wesentlichen parallel zu der Laufbahn 2a liegen. Durch gerade Pfeile sind die Bewegungsrichtungen der Hauptinduktoren 3, 4 während ihrer gegenläufigen Bewegung angedeutet. Außerdem ist durch Pfeile 15 angedeutet, dass der in Arbeitsstellung befindliche Hilfsinduktor 11 mit wenigstens einem zusätzlichen Freiheitsgrad versehen ist, der hier eine Bewegung des Hilfsinduktors 11 um eine parallel zu seiner Mittelachse rotierende und vorzugsweise senkrecht zur Laufbahn 2a angeordnete Drehachse 16 ermöglicht. Wird der Hilfsinduktor 11 daher, wenn er seine Arbeitsstellung dicht oberhalb der Laufbahn 2a erreicht hat, in eine kreisförmige, ovale, rechteckige oder quadratische Bewegung um die Drehachse 16 versetzt und gleichzeitig aktiviert, dann bildet sich statt einer Vorwärmzone, die lediglich eine durch die Lage der Heizleiter der Heizschleife 14 bestimmte, äußere Kontur besitzt, eine Vorwärmzone 17 aus, die eine mehr kreisförmige oder rechteckige Kontur hat und sich jedenfalls über einen größeren Flächenabschnitt erstreckt, als dies ohne Bewegung des Hilfsinduktors 11 möglich wäre. Außerdem wird eine wesentlich gleichförmigere Erwärmung in der Vorwärmzone 17 als bei Anwendung eines starr angeordneten Hilfsinduktors 11 erzielt, weil die Heizschleife 14 bzw. deren Heizleiter 7 während der kreisenden Bewegung ständig ihre Lage relativ zur Laufbahn 2a ändern.

Die beschriebene Drehbewegung um eine raumfeste Drehachse 16 kann dadurch modifiziert werden, dass die Drehachse 16 während der Vorwärmphase zusätzlich einer Pendelbewegung unterworfen wird.

Der Hilfsinduktor 11 ist an einem in x, y, z Richtung beweglichen Kreuztisch 13 befestigt.

Welche Bewegungsarten für den Hilfsinduktor 11 und wie viele Freiheitsgrade für dessen Bewegung günstig sind, kann im Einzelfall anhand von Versuchen festgestellt werden. In jedem Fall sollten die Bewegungen des Hilfsinduktors 11 und die gegenläufigen Bewegungen der Hauptinduktoren 3, 4 so aufeinander abgestimmt sein, dass die Vorwärmzone 17 nach Entfernung des Hilfsinduktors 11 und Zusammenführen der Hauptinduktoren 3, 4 auch im Bereich der sonst vorhandenen, zu weichen Stellen führenden Zwischenräume auf die gewünschte Härtetemperatur gebracht wird.

Eine weitere mögliche Maßnahme zur Vergleichmäßigung der Erwärmung der Laufbahn 2 im Bereich der gemeinsamen Anfangs- und/oder Endzone 8, 10 (Fig. 1) besteht darin, die Haupt- und Hilfsinduktoren 3, 4 und 11 mit unterschiedlichen Frequenzen zu betreiben. In diesem Fall ist es zweckmäßig, die Hauptinduktoren 3 und 4 vor allem dann, wenn sie sich der gemeinsamen Heizzone 8, 10 annähern oder in dieser bereits ihren kleinstmöglichen Abstand einnehmen, mit Heizströmen unterschiedlicher Frequenz zu speisen. Dadurch ist es möglich, solche Ungleichförmigkeiten in den Heizzonen 8, 10 zu vermeiden, die sich in ihnen wegen der sonst identischen und symmetrischen Ausbildung und Betriebsweise ergeben.

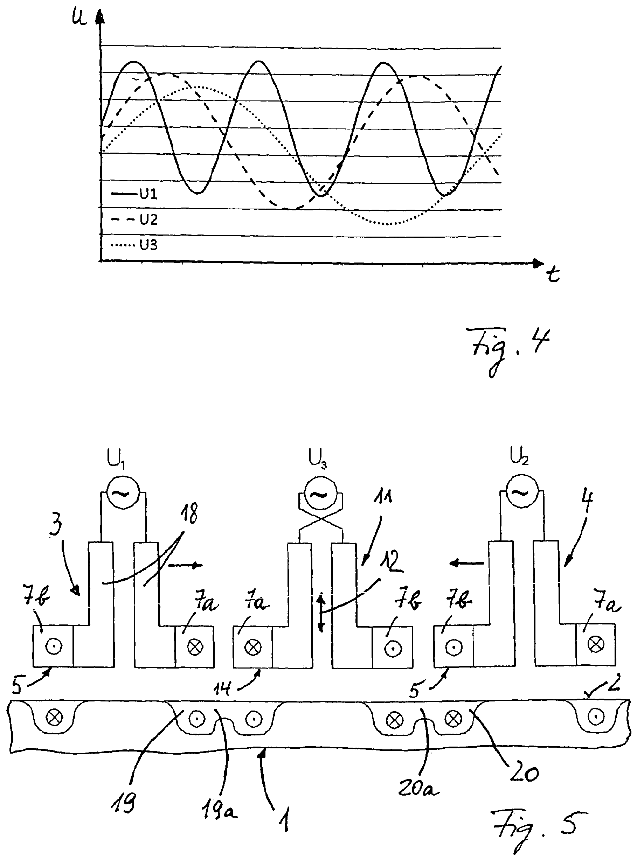

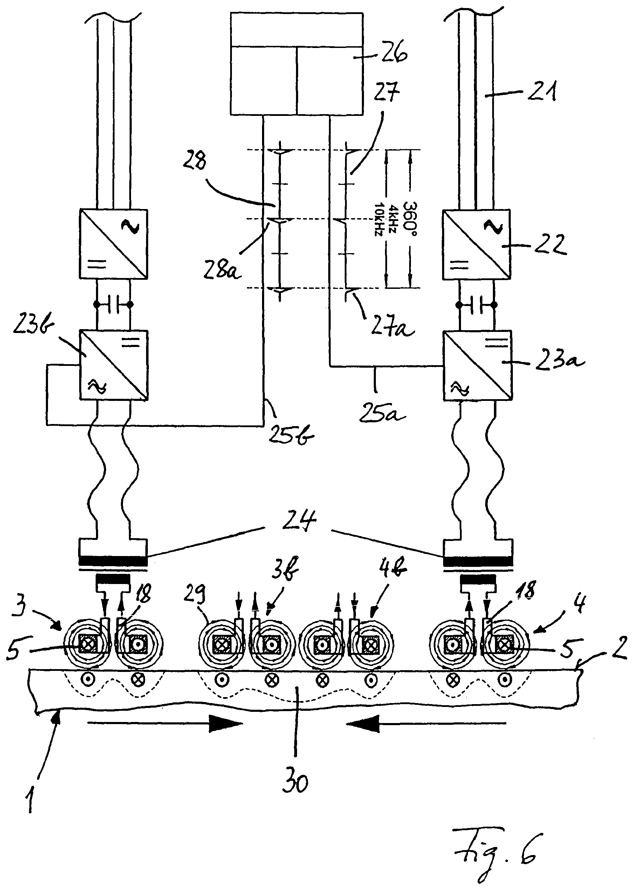

Die Einstellung unterschiedlicher Frequenzen kann unabhängig davon vorgesehen werden, ob nur die beiden Hauptinduktoren 3 und 4 (Fig. 1) oder zusätzlich auch der Hilfsinduktor 11 (Fig. 2) vorhanden sind. Bei der erfindungsgemäßen Anwendung des Hilfsinduktors 11 kann durch Wahl der Frequenz die Art der Vorwärmung und damit die Kontur der Vorwärmzone 17 beeinflusst werden. In Fig. 4 ist beispielhaft ein Fall dargestellt, in dem die Induktoren 3, 4 und 11 mit Spannungen UI, U2 und U3 unterschiedlicher Frequenzen versorgt werden, was entsprechend unterschiedliche Heizströme zur Folge hat. Möglich wäre auch, die Frequenzen der Heizströme während der Erwärmung kritischer Zonen schrittweise oder kontinuierlich zu verändern. Ein drittes, derzeit für am besten gehaltenes Ausführungsbeispiel der Erfindung ist in Fig. 5 und 6 dargestellt. Fig. 5 zeigt grob schematisch die Lage der Hauptinduktoren 3 und 4 sowie des Hilfsinduktors 11 kurz vor dem Zeitpunkt, zu dem der Hilfsinduktor 11 in Richtung des Pfeils 12 angehoben wird, um Platz für das Zusammenführen der Hauptinduktoren 3, 4 zu schaffen. Mit dem Bezugszeichen 18 sind hier die Zuleitungen zu den Heizschleifen 5 und 14 bzw. zu den senkrecht zur Zeichenebene angeordneten Heizleitern 7 dargestellt, wobei die Zuleitungen 18 jedes Induktors 3, 4 und 11 von einer eigenen Wechselspannungsquelle mit den Spannungen UI, U2 und U3 gespeist werden. Schließlich ist in Fig. 5 mit Punkten und Kreuzen innerhalb der Heizleiter 7 angedeutet, in welcher Richtung in einem ausgewählten Zeitpunkt Heizströme durch die Heizleiter 7 fließen. In üblicher Weise bedeuten die Kreuze einen Stromfluss in die Zeichenebene hinein (= Heizleiter 7a), Punkte dagegen einen Stromfluss in entgegengesetzter Richtung, d. h. aus der Zeichenebene heraus (= Heizleiter 7b).

Während normalerweise die von den Spannungsquellen erzeugten Spannungen UI bis U3 unabhängig voneinander sind, ist erfindungsgemäß als zusätzliche Maßnahme zur Vergleichmäßigung der Erwärmung der Anfangs- und/oder Endzonen vorgesehen, die Eigenschaften der Induktoren 3, 4 und 11 so zu steuern, dass die die Heizleiter 7 durchfließenden Heizströme eine definierte Phasenlage haben. Gemäß Fig. 5 ist die Phasenlage insbesondere so gewählt, dass einander zugewandte Heizleiter 7 benachbarter bzw. sich annähernder Induktoren stets in gleicher Richtung von Heizstrom durchflossen werden. In dem aus Fig. 5 ersichtlichen Zeitpunkt werden z. B. die einander gegenüberstehenden Heizleiter 7a der Induktoren 3 und 11 beide in einer Richtung und die einander gegenüberstehenden Heizleiter 7b der Induktoren 11 und 4 beide in entgegengesetzter Richtung von Heizstrom durchflossen.

Da die Erwärmung der Laufbahn 2 darauf beruht, dass die Heizleiter 7a, 7b Wirbelströme in ihr induzieren, die den sie erzeugenden Heizströmen entgegengerichtet sind, können die Wirbelströme, wenn keine Steuerung der Phasenlage erfolgt, in den Übergangsbereichen zwischen zwei Induktoren 3 und 11 bzw. 11 und 4 in entgegengesetzte Richtungen fließen und sich gegenseitig auslöschen oder neutralisieren, wodurch der Wärmeeintrag reduziert wird. Werden die Phasen der Heizströme dagegen entsprechend Fig. 5 so gesteuert, dass die einander gegenüberliegenden Heizleiter 7a bzw. 7b paarweise gleichsinnig von Heizstrom durchflossen werden, dann ist sichergestellt, dass die induzierten Wirbelströme sich maximal addieren und dadurch auch in den kritischen Zwischenräumen eine ausreichende Erwärmung bewirken. Das ist in Fig. 5 schematisch für Zonen 19 und 20 angedeutet, in denen auch die Richtung der Wirbelströme durch Punkte und Kreuze angedeutet ist. Außerdem zeigt Fig. 5, dass die gemeinsamen Heizzonen jeweils einen die Zwischenräume zwischen den Induktoren 3, 11 bzw. 11, 4 überbrückenden Abschnitt 19a, 20a aufweisen.

Wie bei den zuvor beschriebenen Ausführungsbeispielen kann die Steuerung der Phasenlage unabhängig davon vorgenommen werden, ob nur die beiden Hauptinduktoren 3, 4 oder auch der Hilfsinduktor 11 angewendet werden. Beachtlich ist in diesem Fall nicht die Zahl der insgesamt vorhandenen Induktoren, sondern die Phasenlage von deren Heizströmen insbesondere dann, wenn sich zwei Induktoren im Bereich der Anfangs- und/oder Endzonen 8, 10, 19, 20 aneinander annähern oder ihren kleinstmöglichen Abstand zueinander einnehmen.

Ein Ausführungsbeispiel zur Einstellung der Phasenlage ist in Fig. 6 anhand der beiden Induktoren 3 und 4 dargestellt. Die Spannungsquellen für die Spannungen UI1 U2 (Fig. 5) enthalten hier jeweils einen an das übliche Stromnetz 21 angeschlossenen Gleichrichter 22, an den ein Wechselrichter 23a, 23b angeschlossen ist, dessen Ausgänge mit einer Primärspule je eines Transformators 24 verbunden sind. Eine Sekundärspule der Transformatoren 24 ist jeweils an die Zuleitungen 18 (vgl. auch Fig. 5) der zugehörigen Heizschleifen 5 angeschlossen. Durch Punkte, Kreuze und Pfeile sind analog zu Fig. 5 die Richtungen der die Heizleiter der Heizschleifen 5 durchfließenden Ströme zu einem vorgewählten Zeitpunkt dargestellt.

Die Anwendung der Gleichrichter 22 und der Wechselrichter 23a, 23b dient dem Zweck, die Frequenz der den Transformatoren 24 zugeführten Ströme auf Werte von z. B. 4 kHz bis 10 kHz zu erhöhen. Diese Frequenz ist vorzugsweise einstellbar, um im Sinne der Fig. 4 unterschiedliche Frequenzen vorgeben zu können. Im Ausführungsbeispiel nach Fig. 5 und 6 werden jedoch die Frequenzen der Ausgangsspannungen der Wechselrichter 23a, 23b vorzugsweise auf gleiche Werte eingestellt. Je ein weiterer Eingang der Wechselrichter 23a, 23b ist über eine Leitung 25a, 25b mit einer Steuereinheit 26 verbunden. Durch die Leitungen 25a, 25b werden den Wechselrichtern 23a, 23b Steuersignale 27, 28 übermittelt, die die Zündzeitpunkte von deren Leistungstransistoren, Thyristoren od. dgl. und damit deren Phasenlagen steuern. Fig. 6 zeigt beispielhaft, dass z. B. die dem Wechselrichter 23a zugeführten Steuersignale 27 in Abständen 360° je einen positiven Impuls 27a übermitteln und damit die Phasenlage der Ausgangsspannung des Wechselrichters 23a festlegen. Dagegen weisen die dem Wechselrichter 23b zugeführten Steuersignale 28 jeweils genau zwischen zwei Impulsen 27a einen positiven Impuls 28a auf, der die Phasenlage der Ausgangsspannung des Wechselrichters 23b derart vorgibt, dass dessen Phase um genau 180° relativ zur Ausgangsspannung des Wechselrichters 23a verschoben ist. Ein richtiger Anschluss der Wechselrichter 23a, 23b an die Transformatoren 24 hat dann zur Folge, dass sich die in Fig. 5 und 6 angedeuteten Stromflüsse ergeben.

Im Übrigen zeigt Fig. 6, dass die die Wirbelströme erzeugenden, schematisch angedeuteten Magnetfelder 29 zu dem Zeitpunkt, zu dem sich die beiden Induktoren 3, 4 auf ihren kleinstmöglichen Abstand angenähert haben (Bezugszeichen 3b, 4b), in einer gemeinsamen Heizzone 30 zu Wirbelströmen führen, die in dem kritischen Bereich zwischen den beiden Induktoren 3b, 4b gleich gerichtet sind und sich daher allenfalls verstärken, aber nicht gegenseitig auslöschen können. Dadurch ist wiederum eine zusätzliche Vergleichmäßigung der Erwärmung in der Zone 30 möglich.

Wie in den anderen Ausführungsbeispielen kann die beschriebene Einstellung bzw. Steuerung der Phasenlage unabhängig davon vorgenommen werden, ob sich die beiden Hauptinduktoren 3, 4 oder ein Hauptinduktor 3, 4 und der Hilfsinduktor 11 einander annähern oder gegenüber stehen. Außerdem ist klar, dass die beschriebene Einstellung der Phasenlage auch über den gesamten Bewegungsbereich der Induktoren 3, 4 und 11 hinweg vorgenommen und beibehalten werden kann.

Die Erfindung ist nicht auf die beschriebenen Ausführungsbeispiele beschränkt, die auf vielfache Weise abgewandelt werden können. Anstelle der beschriebenen

Eigenschaften können auch andere zweckmäßige Eigenschaften oder Zustände der Induktoren 3, 4 und/oder 11 gesteuert, verändert oder gezielt eingestellt werden, um eine zusätzliche Vergleichmäßigung des Wärmeeintrags insbesondere in den gemeinsamen Heizzonen 8, 10, 19, 20 und 30 zu ermöglichen. Ferner stellen die beschriebenen Mittel zur Steuerung dieser Eigenschaften nur Beispiele dar, die je nach Bedarf abgeändert oder durch andere ersetzt werden können. Außerdem können anstelle der beiden Hauptinduktoren 3 und 4 mehrere Paare von Hauptinduktoren und diesen zugeordnete Hilfsinduktoren 11 vorgesehen werden, um längs der Laufbahnen 2, 2a mehrere Anfangs- und/oder Endzonen zu bilden, in denen zumindest teilweise die Hauptinduktoren von unterschiedlichen Paaren zusammengeführt werden. Schließlich versteht sich, dass die verschiedenen Merkmale auch in anderen als den beschriebenen und dargestellten Kombinationen angewendet werden können.

### Bezugszeichenliste:

1 Lagerring
2, 2a Laufbahn (von 1)
3, 4, 33, 43, 30, 40 Induktor (Hauptinduktor)
5 Heizschleife (von 3, 4)
6 Mittelachse (von 1)
7, 73, 7b Heizleiter
8 Anfangszone (von 2)
9 Zwischenzone (von 2)
10 Endzone (von 2)
11 Hilfsinduktor
12 Doppelpfeil
13 Kreuztisch
14 Heizschlaufe
15 Pfeil
16 Drehachse
17 Vorwärmzone
18 Zuleitungen (zu 5, 7, 14)
19, 193 Heizzone
20, 20a Heizzone
21 Stromnetz
22 Gleichrichter
23a, 23b Wechselrichter
24 Transformator
25a, 25b Leitung
26 Steuereinheit
27, 273 Steuersignale
28, 283 Steuersignale
29 Magnetfeld
30 Heizzone
UI1 U2, U2 Spannung (von 3, 4, 11]

## Patentansprüche

1. Verfahren zum Härten wenigstens einer Laufbahn (2, 2a) eines Lagerrings (1) für ein Großwälzlager, enthaltend die folgenden Verfahrensschritte:
- Anordnung von wenigstens zwei Hauptinduktoren (3, 4) im Bereich einer gemeinsamen Anfangszone (8) der Laufbahn (2, 2a) und Erwärmung der Laufbahn (2, 2a) im Bereich der Anfangszone (8) mittels der Hauptinduktoren (3, 4);
- Bewegung der Hauptinduktoren (3, 4) in entgegengesetzte Richtungen längs der Laufbahn (2, 2a) und Erwärmung der Laufbahn (2, 2a) mittels der Induktoren (3, 4) in aufeinander folgend von diesen passierten Zwischenzonen (9) bis zum Erreichen und Erwärmen einer Zone, an der zwei entgegengesetzt bewegte Hauptinduktoren (3, 4) unter Bildung einer gemeinsamen Endzone (10) zusammentreffen;
- Anwendung eines zusätzlichen Hilfsinduktors (11) im Bereich der Endzone (10), Vorwärmung der Laufbahn (2, 2a) mit dem Hilfsinduktor (11) im Bereich der Endzone (10) und Entfernen des Hilfsinduktors (11) aus dem Bereich der Endzone (10), bevor sich die beiden Hauptinduktoren (3, 4) der Endzone (10) unmittelbar annähern;
- Abschreckung der Laufbahn (2, 2a) im Bereich der mittels der Induktoren (3, 4, 11) erwärmten Anfangs-, Zwischen- und Endzone(n) (8, 9, 10) und
- Vergleichmäßigung der Erwärmung der Laufbahn (2, 2a) im Bereich der gemeinsamen Anfangs- und/oder Endzone (8, 10) durch wenigstens eine zusätzliche Maßnahme,
**dadurch gekennzeichnet, dass**
- die zusätzliche Maßnahme eine mechanische Steuerung oder Einstellung wenigstens einer ausgewählten Eigenschaft des Hilfsinduktors (11) zumindest während der Vorwärmung der Endzone (10) vorsieht,
- wobei die wenigstens eine ausgewählte Eigenschaft die örtliche Lage des Hilfsinduktors (11) ist und die zusätzliche Maßnahme eine mit wenigstens einem zusätzlichen Freiheitsgrad erfolgende Bewegung des Hilfsinduktors (11) während der Vorwärmung vorsieht,
wobei die Bewegung des Hilfsinduktors (11) kreisförmig, elliptisch, rechteckig oder quadratisch erfolgt, wobei die Heizleiter (7) des Hilfsinduktors (11) immer parallel zur Laufbahn (2, 2a) angeordnet sind.

2. Verfahren nach Anspruch 1, **dadurch gekennzeichnet, dass** die Bewegung des Hilfsinduktors (11) zumindest eine Drehbewegung parallel zur Laufbahn (2, 2a) einschließt.

3. Verfahren nach Anspruch 1 oder 2, **dadurch gekennzeichnet, dass** die ausgewählte Eigenschaft die Frequenz von die Haupt- und/oder Hilfsinduktoren (3, 4, 11) durchfließenden Heizströmen ist und die zusätzliche Maßnahme ein Betreiben der Haupt- und Hilfsinduktoren (3, 4, 11) mit unterschiedlichen und gegebenenfalls sich ändernden Frequenzen vorsieht.

4. Verfahren nach Anspruch 3, **dadurch gekennzeichnet, dass** die Hauptinduktoren (3, 4) zumindest dann, wenn sie sich der Anfangs- und/oder Endzone (8, 10) annähern oder in dieser angeordnet sind, mit unterschiedlichen Frequenzen betrieben werden.

5. Verfahren nach einem der Ansprüche 1 bis 4, **dadurch gekennzeichnet, dass** die ausgewählte Eigenschaft die Phasenlage von die Haupt- und Hilfsinduktoren (3, 4, 11) durchfließenden Heizströmen ist und die zusätzliche Maßnahme eine vorgewählte Einstellung der Phasen dieser Heizströme vorsieht.

6. Verfahren nach Anspruch 5, **dadurch gekennzeichnet, dass** die Phasenlage der Heizströme insbesondere bei der Annäherung von zwei Hauptinduktoren (3, 4) oder eines Haupt- und des Hilfsinduktors (3, 11; 4, 11) im Bereich der Endzone (19, 20, 30) so eingestellt wird, dass einander zugewandte Heizleiter (7a, 7b) der Induktoren (3, 4, 11) in gleicher Richtung von Heizströmen durchflossen werden.

7. Verfahren nach Anspruch 5 oder 6, **dadurch gekennzeichnet, dass** die Einstellung der Phasenlage durch die Steuerung der Ausgangsspannungen (U1 bis U3) von Spannungsquellen erfolgt, mittels derer die Heizströme erzeugt werden.

## Claims

1. Method for hardening at least one raceway (2, 2a) of a bearing ring (1) for a large-diameter anti-friction bearing, comprising the following method steps:
- arranging of at least two main inductors (3, 4) in the region of a common starting zone (8) of the raceway (2, 2a), and heating of the raceway (2, 2a) in the region of the starting zone (8) by means of the main inductors (3, 4);
- moving of the main inductors (3, 4) in opposite directions along the raceway (2, 2a), and heating of the raceway (2, 2a) by means of the inductors (3, 4) in intermediate zones (9) which are passed by the latter consecutively, until a zone is reached and heated, at which zone two main inductors (3, 4) which are moved in opposite directions meet with the formation of a common end zone (10);
- using of an additional auxiliary inductor (11) in the region of the end zone (10), preheating of the raceway (2, 2a) by way of the auxiliary inductor (11) in the region of the end zone (10), and removing of the auxiliary inductor (11) from the region of the end zone (10) before the two main inductors (3, 4) approach the end zone (10) directly;
- quenching of the raceway (2, 2a) in the region of the starting, intermediate and end zone/zones (8, 9, 10) which are heated by means of the inductors (3, 4, 11), and
- homogenizing of the heating of the raceway (2, 2a) in the region of the common starting and/or end zone (8, 10) by way of at least one additional measure,
**characterized in that**
- the additional measure provides mechanical controlling or setting of at least one selected property of the auxiliary inductor (11) at least during the preheating of the end zone (10),
- the at least one selected property being the locality of the auxiliary inductor (11), and the additional measure providing a movement of the auxiliary inductor (11) during the preheating, which movement takes place with at least one additional degree of freedom, whereby the movement of the auxiliary inductor (11) takes place in circular, elliptical, rectangular or square manner, the heating conductors (7) of the auxiliary inductor (11) always being arranged parallel to the raceway (2, 2a).

2. Method according to Claim 1, **characterized in that** the movement of the auxiliary inductor (11) includes at least one rotational movement parallel to the raceway (2, 2a).

3. Method according to Claim 1 or 2, **characterized in that** the selected property is the frequency of the heating currents which flow through the main and/or auxiliary inductors (3, 4, 11), and the additional measure provides operating of the main and auxiliary inductors (3, 4, 11) at frequencies which are different and possibly change.

4. Method according to Claim 3, **characterized in that** the main inductors (3, 4) are operated at different frequencies at least when they approach the starting and/or end zone (8, 10) or are arranged in the latter.

5. Method according to one of Claims 1 to 4, **characterized in that** the selected property is the phase relation of heating currents which flow through the main and auxiliary inductors (3, 4, 11), and the additional measure provides preselected setting of the phases of said heating currents.

6. Method according to Claim 5, **characterized in that** the phase relation of the heating currents is set, in particular, in the case of the approach of two main inductors (3, 4) or one main inductor and the auxiliary inductor (3, 11; 4, 11) in the region of the end zone (19, 20, 30), in such a way that mutually facing heating conductors (7a, 7b) of the inductors (3, 4, 11) are flowed through in the same direction by heating currents.

7. Method according to Claim 5 or 6, **characterized in that** the setting of the phase relation takes place by way of the control of the output voltages (U1 to U3) of voltage sources, by means of which the heating currents are generated.

## Revendications

1. Procédé de trempe d'au moins une piste de roulement (2, 2a) d'un anneau de palier (1) pour un palier à roulements de grande dimension, comprenant les étapes de procédé suivantes :
- la disposition d'au moins deux inducteurs principaux (3, 4) dans la région d'une zone de début commune (8) de la piste de roulement (2, 2a) et le chauffage de la piste de roulement (2, 2a) dans la région de la zone de début (8) au moyen des inducteurs principaux (3, 4) ;
- le déplacement des inducteurs principaux (3, 4) dans des directions opposées le long de la piste de roulement (2, 2a) et le chauffage de la piste de roulement (2, 2a) au moyen des inducteurs (3, 4) dans des zones intermédiaires successives (9) parcourues par ceux-ci jusqu'à atteindre et chauffer une zone où deux inducteurs principaux (3, 4) déplacés en opposition se réunissent pour constituer une zone de fin commune (10) ;
- la mise en œuvre d'un inducteur auxiliaire supplémentaire (11) dans la région de la zone de fin (10), le préchauffage de la piste de roulement (2, 2a) au moyen de l'inducteur auxiliaire (11) dans la région de la zone de fin (10) et le retrait de l'inducteur auxiliaire (11) de la zone de fin (10) avant que les deux inducteurs principaux (3, 4) se rapprochent directement de la zone de fin (10) ;
- le refroidissement brusque de la piste de roulement (2, 2a) dans la région des zones de début, intermédiaire et de fin (8, 9, 10) chauffées au moyen des inducteurs (3, 4, 11) et
- la régularisation du chauffage de la piste de roulement (2, 2a) dans la région de la zone de début et/ou de fin commune (8, 10) en prenant au moins une mesure supplémentaire,
**caractérisé en ce que**
- la mesure supplémentaire prévoit une commande ou un réglage mécanique d'au moins une propriété sélectionnée de l'inducteur auxiliaire (11) au moins pendant le préchauffage de la zone de fin (10),
- dans lequel ladite au moins une propriété sélectionnée est la position spatiale de l'inducteur auxiliaire (11) et la mesure supplémentaire prévoit un mouvement de l'inducteur auxiliaire (11) avec au moins un degré de liberté supplémentaire pendant le préchauffage, selon lequel le mouvement de l'inducteur auxiliaire (11) s'effectue de manière circulaire, elliptique, rectangulaire ou quadratique, dans lequel les conducteurs chauffants (7) de l'inducteur auxiliaire (11) sont toujours disposés parallèlement à la piste de roulement (2, 2a).

2. Procédé selon la revendication 1, **caractérisé en ce que** le mouvement de l'inducteur auxiliaire (11) inclut au moins un mouvement de rotation parallèle à la piste de roulement (2, 2a).

3. Procédé selon la revendication 1 ou 2, **caractérisé en ce que** la propriété sélectionnée est la fréquence des courants de chauffage parcourant les inducteurs principaux et/ou auxiliaires (3, 4, 11) et **en ce que** la mesure supplémentaire prévoit un fonctionnement des inducteurs principaux et auxiliaires (3, 4, 11) à des fréquences différentes et éventuellement variables.

4. Procédé selon la revendication 3, **caractérisé en ce que** les inducteurs principaux (3, 4) fonctionnent à des fréquences différentes au moins lorsqu'ils se rapprochent de la zone de début et/ou de fin (8, 10) ou lorsqu'ils sont disposés dans celle-ci.

5. Procédé selon l'une des revendications 1 à 4, **caractérisé en ce que** la propriété sélectionnée est la position de phase des courants de chauffage parcourant les inducteurs principaux et auxiliaires (3, 4, 11) et **en ce que** la mesure supplémentaire prévoit un réglage présélectionné des phases desdits courants de chauffage.

6. Procédé selon la revendication 5, **caractérisé en ce que** la position de phase des courants de chauffage, en particulier lorsque deux inducteurs principaux (3, 4) ou un inducteur principal et l'inducteur auxiliaire (3, 11 ; 4, 11) se rapprochent de la zone de fin (19, 20, 30), est réglée de manière à ce que les conducteurs chauffants (7a, 7b) des inducteurs (3, 4, 11) se faisant mutuellement face soient parcourus par des courants de chauffage circulant dans la même direction.

7. Procédé selon la revendication 5 ou 6, **caractérisé en ce que** le réglage de la position de phase s'effectue en commandant les tensions de sortie (U1 à U3) des sources de tension au moyen desquelles les courants de chauffage sont générés.
